# EUROPEAN PATENT SPECIFICATION

(11) **EP 4 309 549 B1**
(45) Date of publication and mention of the grant of the patent: **26.03.2025**
(21) Application number: 23185875.4
(22) Date of filing: 17.07.2023
(51) Int. Cl.: A47J 31/44, A47J 31/46

(54) **APPARATUS FOR FROTHING MILK, PARTICULARLY FOR A PROFESSIONAL COFFEE MACHINE, AND RELATED METHOD**
VORRICHTUNG ZUM AUFSCHÄUMEN VON MILCH, INSBESONDERE FÜR EINE PROFESSIONELLE KAFFEEMASCHINE, UND ZUGEHÖRIGES VERFAHREN
APPAREIL POUR FAIRE MOUSSER DU LAIT, EN PARTICULIER POUR UNE MACHINE À CAFÉ PROFESSIONNELLE, ET PROCÉDÉ ASSOCIÉ

(30) Priority: 18.07.2022 IT 202200015034
(43) Date of publication of application: 24.01.2024
(73) Proprietor: Fluid-O-Tech S.r.l., 20094 Corsico (MI) (IT)
(72) Inventor: CAPPELLINI, Davide, 26029 SONCINO (CR) (IT); ANDREIS, Diego, 20145 MILANO (MI) (IT)
(74) Representative: Cosenza, Simona

(56) References cited:
- EP-A1- 3 040 000
- EP-A1- 3 066 964
- US-A1- 2020 054 163
- US-B2- 9 381 473

## Description

The present invention refers to an apparatus for frothing milk, particularly for a professional coffee machine, and to a related method for frothing milk, both cold milk and heated milk.

In the present description, the term frothing means a process for forming froth, also called whipping, which can have different levels measurable by the volume/weight ratio of the froth, obtainable for any type of milk (for example, full-cream, long-life, or semi-skimmed milk), including surrogates thereof such as for example vegetal-origin milk (e.g., soy, almond, nut milk, etc.).

In a specific but non-exclusive manner, the invention can be advantageously applied in the field of professional coffee machines called "super automatic", for preparing coffee-based and milk-based beverages (cappuccino, latte macchiato) but also for preparing milk- and syrup-based beverages. Such machines can be installed both in guarded modes, i.e., governed by an operator, and in self-service mode, such as for example those installed in airport or stations lounge rooms. Such super automatic machines are characterized by the high automation degree and use easiness being typically operated by low-professional staff or even in self-service mode.

In the restaurant and hospitality field, these typologies of machines are increasingly appreciated and required and in the last 15 years a continuous technological evolution for responding to the growing requirement of increasing the offered beverages, such as for example those based on whipped cold milk on one side, and the use and reliability easiness on the other side, has been observed.

Indeed, one of the main problems of all the known-type frothing solutions is to ensure quality and stability of the froth over time. It is also known that known-type solutions, due to various factors, such as for example the different typologies of milk, the modification of the operation conditions of the circuits due to deposits of the milk itself, the different operation conditions due to the incorrect staff training (such as for example the erroneous temperature of the milk before whipping), have always required frequent maintenance interventions by specialized technicians.

Various devices and methods for whipping milk are currently known. These methods can be classified in two approach typologies determined by the technique for heating milk in case of preparing a hot whipped milk-based beverage.

A first method for heating milk uses saturated steam coming from the so-called "service boiler" of the coffee machine, while a second method uses instant heaters. Each of these methods has advantages but also disadvantages.

For example, the main drawback of using steam consists in the low quality of the froth being formed. According to the known solutions, such as those presented in the following prior art documents: EP3040000A1, EP3066964B1,

EP3039999B1, EP3064104B1, US9381473B2, the steam is inserted downstream of the member used for forming the froth, i.e., downstream of the gear pump. However, injecting steam downstream of the already whipped milk, in order to heat it, has a negative impact on the already formed froth, and remarkably deteriorates the quality thereof.

The physical cause of the negative impact of the steam on the milk froth is the following. The mixture of air and milk coming from the pump typically has a temperature remarkably lower than the whipped milk. Typically, the temperature is around 5°C for obvious reasons concerning the storing of milk, normally put in the refrigerator. In any case, the temperature of milk never exceeds the room temperature. When steam contacts the mixture, it gives part of its energy to the milk and part to the air. The result is thus a quick expansion of the air creating undesired bubbles. Indeed, it is known for those skilled in the art that the perfect milk whipping needs to have a smooth, compact, and bubble-less surface texture. The presence of bubbles even with a diameter of a few tenths of a millimetre, visible for a human eye, is a clear indication of low quality of the froth.

In order to mitigate the negative impact of the steam on the milk froth, various-nature elements, both of static-type and dynamic-type, have been added downstream of the entry of steam, in order to break the air bubbles and re-homogenize the presence of air in the heated milk froth.

However, even such solutions are not drawback-less, since inserting a further mechanical element downstream of the pump makes the apparatus more complex to make, to operate and to maintain. Indeed, such additional elements need to be kept suitably clean, both for hygienical reasons and for correctly operating. Furthermore, in the case of preparing cold whipped milk, the presence of such additional re-frothing elements, placed downstream of the gear pump, can have a negative effect on the cold milk frothing.

The second method for whipping hot milk uses instant thermal exchangers. For example, those presented in the prior art documents US10631561B2 and US10092015B2 are cited. This method bypasses the problem of the degradation of the milk froth due to heating by means of steam but introduces other problems. Indeed, in order to provide the thermal energy so as to ensure the temperature difference of the milk froth of about 60-70°C, the instant thermal exchangers require a remarkable exchange surface. Such exchange surface is materialized in a higher circuital volume downstream of the pump, making the draining of the circuit itself at the end of each delivery more difficult. Draining the instant exchanger is crucial because the possible residual, due to the thermal inertia of the instant exchanger, promotes the formation of a sclerosing deposition in the circuit itself. This deposition interferes over time with both the reliability of the system and the quality of the delivered beverage, affecting the load losses of the circuit downstream of the pump and its balance in order to ensure a high milk whipping. In order to overcome such issues, complex systems of washing at the end of each delivery have been introduced. Such systems solved the problem of residuals but involve both increasing the system complexity and wasting residual milk being washed at each exchanger washing.

The main task of the present invention consists in making an apparatus, and a method, for frothing milk, particularly for a professional coffee machine which overcomes the prior art drawbacks, allowing to ensure the obtaining of a high-quality milk froth being stable over time.

In the scope of this task, an object of the present invention is to make an apparatus, and a method, which allows to process both cold milk and heated milk.

Another object of the invention consists in making an apparatus, and a method, which allows to process any typology of milk, including also the derivates and/or surrogates thereof.

A further object of the invention consists in making an apparatus for frothing milk being easy to make and economically competitive if compared to the prior art.

Still another object of the invention consists in making an apparatus being easy to use and to maintain, also by non-specialized staff.

Still another object of the invention consists in making an apparatus, and a method, being reliable over time and not requiring continuous setting adjustments.

A further object of the invention consists in making an apparatus, and a method, which can give the widest guarantees about reliability and safety in use.

The task set forth above, as well as the mentioned objects and other that will better appear below, are achieved by an apparatus for frothing milk, particularly for a professional coffee machine, as set forth in claim 1 and by a method for frothing milk as set forth in claim 10.

Other features are provided in the dependent claims.

Further features and advantages will be more apparent from the description of four preferred, but not exclusive, embodiments, of an apparatus for frothing milk, illustrated for exemplary and non-limiting purposes with the aid of the attached drawings in which:
figure 1 shows a circuital diagram of a first embodiment of an apparatus for frothing milk, according to the invention;
figure 1a shows a circuital diagram of a second embodiment of an apparatus for frothing milk, according to the invention;

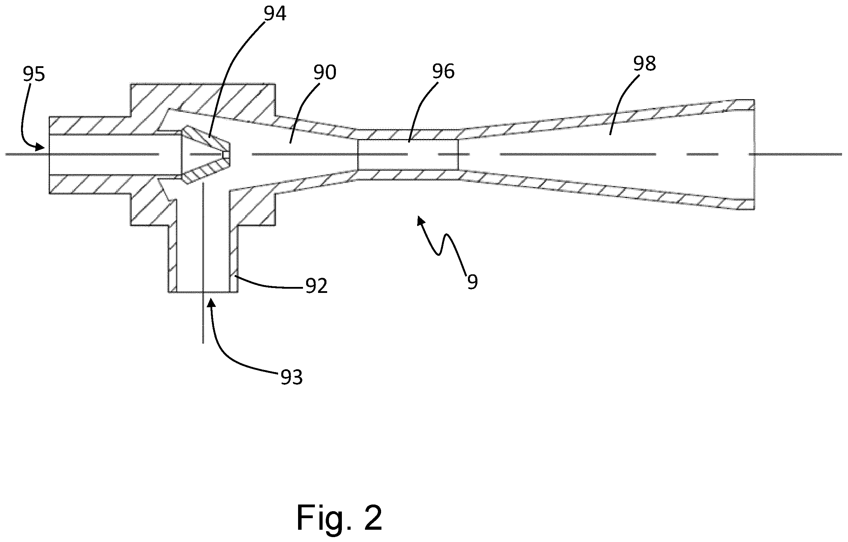

figure 2 is a longitudinal-sectional view of a component of the apparatus for frothing milk, according to the invention;
figure 3 shows a circuital diagram of a third embodiment of an apparatus for frothing milk, according to the invention;
figure 3a shows a circuital diagram of a fourth embodiment of an apparatus for frothing milk, according to the invention;
figure 3b shows a circuital diagram of a fifth embodiment of an apparatus for frothing milk, according to the invention.

With reference to the cited figures, the apparatus for frothing milk, overall indicated with reference number 1, comprises, according to the invention:
- a container 3 adapted to contain milk to be frothed;
- a steam source 5;
- a steam ejector device 9 comprising a first inlet line 93 in fluid communication with the container 3, and a second inlet line 95 in fluid communication with the steam source 5, where such steam ejector device 9 is configured to inject steam into the milk to be frothed to obtain a milk and steam mixture, and where such steam ejector device 9 comprises an outlet line 97 of the milk and steam mixture;

- an air intake 7 in fluid communication with the outlet line 97 of the steam ejector device 9;
- a pump 11, preferably a gear pump, placed downstream of the steam ejector device 9, configured to suck the mixture of milk and steam and air coming from the outlet line 97 of the steam ejector device 9, where such pump 11 is adapted to form a froth of the mixture of milk and steam and to deliver such froth along a delivery line 111, to a mug 113 adapted to contain the froth.

The apparatus 1 further comprises a control unit 15 in data communication at least with the pump 11. Such pump 11 is drivable based on inputs provided by the control unit 15, for example based on the recipe for preparing the milk froth to be delivered. The control unit 15 can be configured to vary the rotational speed of the rotatable pumping members of the pump 11, such as for example the related gears.

The steam ejector device 9 is usable for heating milk coming from the container 3 and is installed upstream of the pump 11.

With a suitable sizing, supplying the steam ejector device 9 with the correct quantity of steam, during the operation of the apparatus 1 allows to obtain a depression upstream of the device 9 itself, i.e., on the milk line (first inlet line 93) and a positive pressure downstream. This condition produces two important advantages. The first advantage lies in that the depression helps the apparatus 1 to suck milk from the container 3, even in disadvantageous conditions. Indeed, refrigerators containing milk are often installed at a lower height than the coffee machines, below the counters, and frequently the only suction of the pump 11 is not sufficient. The second advantage lies in that generating a positive pressure downstream of the device 9 itself, thus upstream of the pump 11, allows the latter to work always in ideal triggering conditions.

Furthermore, installing the steam ejector device 9 upstream of the pump 11 allows not to have the problems about the quality of the froth affecting the solutions of the state of the art, since the flow of air and the flow of the milk and steam mixture are definitively whipped and homogenized inside the pump 11 itself.

In this way, the apparatus 1 has, downstream of the pump 11, an extremely simple circuit, so as to allow the pump 11 to be placed remarkably near the nozzle 114 for outputting/delivering the milk froth to the mug 113.

Indeed, preferably, along the delivery line 111, downstream of the pump 11 only a discharge valve 112 is placed, preferably a three-way valve for connecting to a discharge and washing line 115.

Such discharge valve 112 is indeed the only element interposed between the pump 11 and the delivery nozzle 114.

Reducing the distance and the number of elements the froth needs to pass through to reach the delivery nozzle 114 remarkably reduces the possibility of deterioration of the same. Furthermore, the issue related to the air expansion due to heating of the mixture of milk and air is totally eliminated, because possibly created bubbles will be however eliminated inside the pump 11 which typically rotates at several thousands of revolutions per minute and is intrinsically suitable for eliminating bubbles generated by the air expansion.

Preferably, the apparatus 1 comprises a first proportional valve 50 placed on the second inlet line 95, between the steam source 5 and the steam ejector device 9.

In this way, the input of steam in the device 9 is controlled by the proportional valve 50. Indeed, such proportional valve 50 can be open at a percentage value between 0% and 100% based on the recipe for preparing the froth to be set.

Preferably, the control unit 15 is in data communication with the first proportional valve 50 and is configured to drive such valve, for example based on the recipe of the beverage to be delivered.

Preferably the air intake 7 is in fluid communication with the outlet line 97 of the steam ejector device 9 by means of a second proportional valve 70.

In this way, the input of air in the pump 11 is controlled by the proportional valve 70. Indeed, such proportional valve 70 can be open at a percentage value between 0% and 100% based on the recipe for preparing the froth to be set.

Preferably, the control unit 15 is in data communication with the second proportional valve 70 and is configured to drive such valve, for example based on the recipe of the beverage to be delivered.

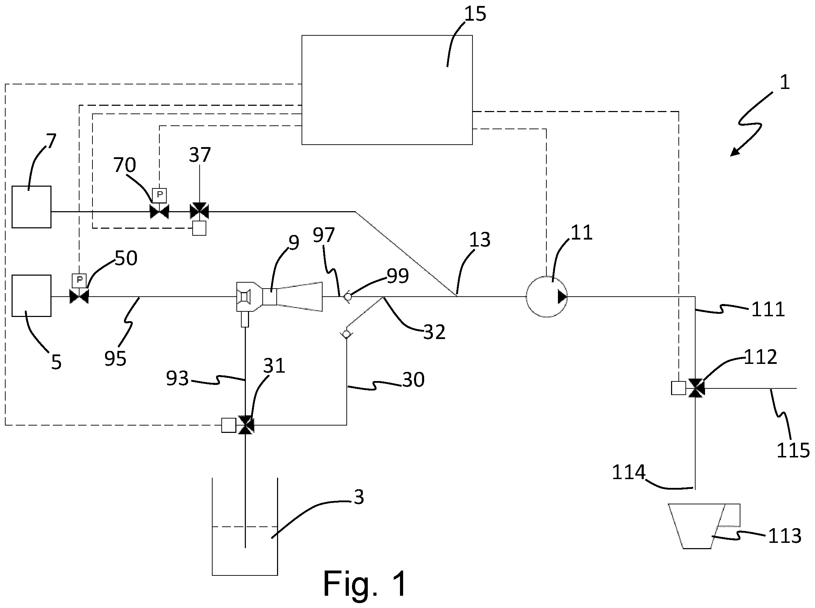

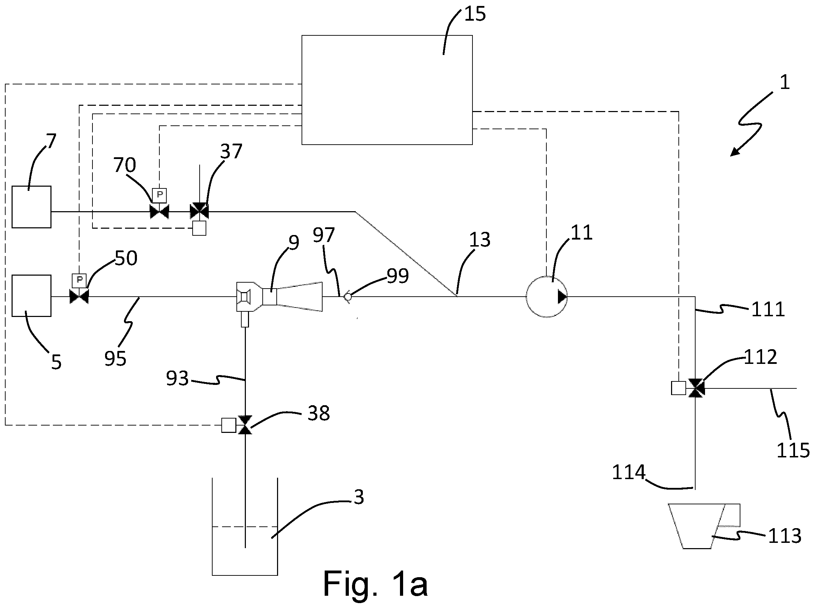

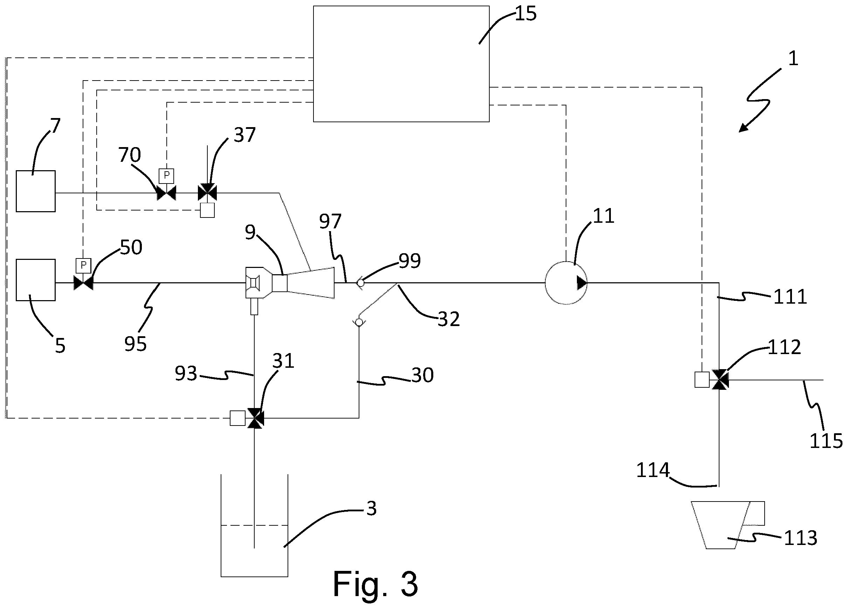

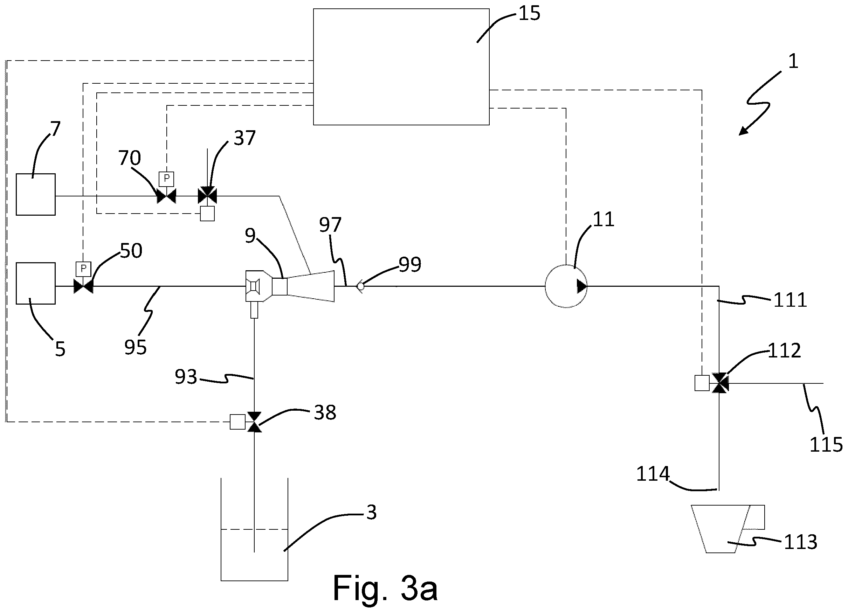

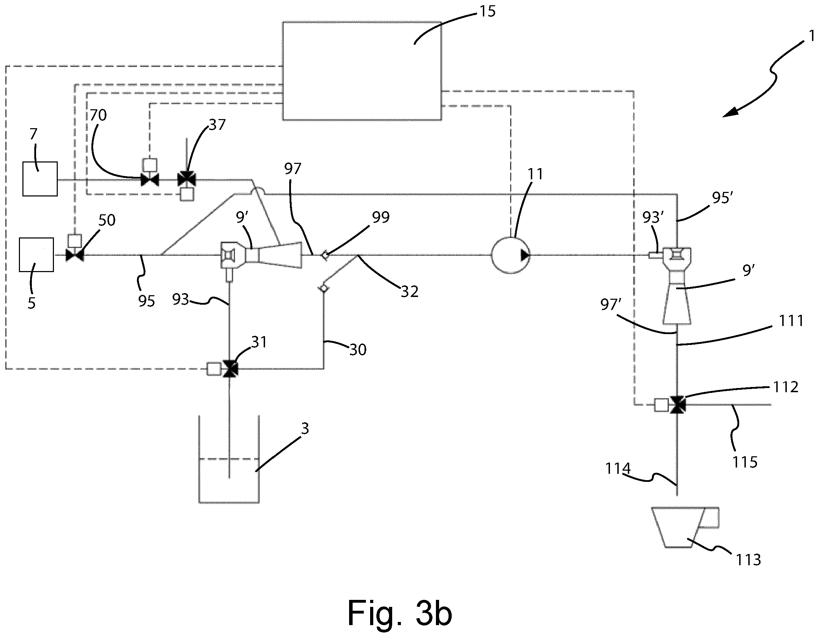

Preferably, as illustrated in figures 1 and 3, the apparatus 1 comprises a bypass line 30 in fluid communication respectively with the container 3 and with the outlet line 97 of the steam ejector device 9 by means of a three-way fitting 32. Furthermore, the apparatus 1 also comprises a three-way bypass valve 31. In such case, the first inlet line 93 of the steam ejector device 9 and the bypass line 30 are in fluid communication with the outlet line 97 of the steam ejector device 9 by means of the bypass valve 30.

Such bypass line 30 is used to bypass the steam ejector device 9 when preparing frothed cold milk. In such case, the milk does not need to pass through the steam ejector device 9 in order for it to be heated. In more detail, there is no need to inject steam into the milk to be frothed from the container 3 by means of the steam ejector device 9.

Preferably, the apparatus 1 comprises a third three-way washing valve 37, preferably installed downstream of the air intake 7.

Preferably, the control unit 15 is in data communication also with the third three-way washing valve 37 and with the discharge valve 112 which, if suitably driven, allow a cleaning fluid to clean and disinfect the lines of the apparatus 1 in which, during the normal operation, the mixture of milk and steam and/or the mixture of milk and steam and air flows.

In a particular embodiment, as shown in figure 1a, 3a, the bypass line 30 is not present. In such case, however, frothed cold milk can be prepared due to the presence of the proportional valve 50 placed on the second inlet line 95 downstream of the steam source 5 and upstream of the steam ejector device 9. In this case, the milk to be frothed still passes through the steam ejector device 9, but the steam is not injected. Indeed, keeping such proportional valve 50 closed (i.e., setting it at an opening percentage value equal to 0%) is sufficient to block the passage of steam from the steam source 5 to the steam ejector device 9 through the second inlet line 95. In this way, milk coming from the container 3 reaching the steam ejector device 9 through the inlet line 93 is not heated since no steam is injected.

The apparatus 1 can advantageously comprise a two-way valve 38, interposed between the container 3 and the steam ejector device 9.

Preferably, the control unit 15 is in data communication with such two-way valve 38. Since during dedicated cycles for cleaning/sanifying the circuit the steam can also be used, the valve 38 can be suitably driven during such operations in order to avoid that part of the steam reaches the container 3. Indeed, if part of the steam during the sanifying operations reaches the milk contained in the container 3, it could be heated at such a temperature to undermine the quality of the subsequent deliveries, in particular of whipped cold milk. Indeed, it is known that in order to whip cold milk, the milk temperature should not be higher than 5°C.

Advantageously, the steam ejector device 9 comprises a suction chamber 90 on which a suction mouth 92 connected to the first inlet line 93 and a steam injection nozzle 94 connected to the second inlet line 95 are respectively facing. Furthermore, the steam ejector device 9 further comprises a mixing chamber 96 communicating with the suction chamber 90, and a diffusion chamber 98 communicating with the mixing chamber 96. The suction chamber 90 is the place where milk is sucked from the container 3 and the steam is injected into the milk to be frothed. In more detail, the milk from the container 3 through the first inlet line 93, reaches the suction chamber 90 through the suction mouth 92, while steam, coming from the steam source 5 through the second inlet line 95, reaches such suction chamber 90 by means of the steam injection nozzle 94. The mixing chamber 96 is instead the place in which milk and steam are mixed to form the milk and steam mixture, such that the steam can heat the milk. Such milk and steam mixture is then conveyed towards the outlet line 97 through the diffusion chamber 98.

The suction chamber 90, the mixing chamber 96 and the diffusion chamber 98 respectively present a volume whose cross section has a different profile along the longitudinal development direction. In more detail, the suction chamber 90 presenting a volume whose cross section narrows as it approaches the mixing chamber 96, the diffusion chamber 98 presenting a volume whose cross section widens away from the chamber 96, while the mixing chamber 96 presenting a volume having a substantially constant cross section along the longitudinal development direction. The three chambers 90, 96, 98 are sequentially linked to each other so as not to create step discontinuities in the flow path of the fluid.

Sizing the volumes of the chambers 90, 96, 98 of the steam ejector device 9 allows to obtain a depression upstream of the device 9 itself and a positive pressure downstream, so as to produce the two important advantages mentioned above.

Preferably, the apparatus 1 comprises a non-return valve 99 placed downstream of the steam ejector device 9 and configured to avoid that the milk and steam mixture returns back inside the steam ejector device 9 after being already diffused along the outlet line 97 through the diffusion chamber 98. The presence of the non-return valve 99 further has the function to avoid, during the operations of washing the circuit, the return of washing water coming from the valve 37 towards the steam ejector 9, so as to prevent the possible washing water storage which would affect the quality of the subsequent delivery.

In a particular embodiment, as shown in figures 1 and 1a, the apparatus 1 comprises a three-way fitting 13 adapted to put the air intake 7 in fluid communication with the outlet line 97 of the steam ejector device 9. In such case, such three-way fitting 13 is placed downstream of the steam ejector device 9 and upstream of the pump 11.

In a particular embodiment, as shown in figures 3, 3a and 3b, the air intake 7 is in fluid communication directly with the steam ejector device 9 in proximity to the outlet line 97. In such case, there is no three-way fitting 13. Thus, the air enters the steam ejector device 9 just after the milk and steam mixture is formed, for example enters the diffusion chamber 98. In this way, there is the advantage of further simplifying the circuit eliminating the three-way fitting 13 downstream of the steam ejector device 9 and making the circuit of the apparatus 1 even more compact.

In a further preferred embodiment, as shown for example in figure 3b, the apparatus 1 comprises an auxiliary steam ejector device 9' arranged downstream of the pump 11.

The auxiliary steam ejector device 9' is arranged along the delivery line 111.

The auxiliary steam ejector device 9' comprises:
- a first inlet line 93' in fluid communication with the outflow of the pump 11 from which it receives the froth of the milk and steam mixture formed therein;
- a second inlet line 95' in fluid communication with the steam source 5 or another steam source;
- an outlet line 97' of the mixture of the froth and steam formed therein.

The outlet line 97' of the auxiliary steam ejector device 9' is in fluid communication with the delivery line 111 along which it supplies the mixture of froth and steam formed therein.

The auxiliary steam ejector device 9' is arranged upstream of the discharge valve 112.

The auxiliary steam ejector device 9' is configured to inject a further quantity of steam in the froth of the milk and steam mixture outgoing from the pump 11. The injection of a further quantity of steam in the froth outgoing from the pump 11 allows to increase the temperature of the froth delivered.

Advantageously, such increase is comprised between 10°C and 20°C.

Preferably, the auxiliary steam ejector device 9' is structured as the steam ejector device 9.

Even in the case depicted in figure 3b, a bypass line 30 can be provided as described above. In a possible alternative, an auxiliary bypass line can be provided which bypasses the auxiliary steam ejector device 9' by connecting the outflow of the pump 11 to the segment of the delivery line 11 downstream of the outlet line 97' of the latter.

The provision of an auxiliary steam ejector device 9' downstream of the pump 11 allows to further increase the temperature of the froth delivered when required by particular production requirements such as, for example, in the case of delivery of take-away or so-called "ready to go" beverages, i.e. intended to be transported by the user.

In fact, it is known that the ideal temperature for a so-called "Italian cappuccino" is between 60°C and 65°C, since higher temperatures can have negative effects on the texture of the milk froth. However, there may be the need to produce milk froths at higher temperatures; a requirement that can be dictated by the need to satisfy different consumption habits or by the need to produce take-away beverages or so-called "ready to go" beverages.

In this latter case, for example, the beverages are produced at higher temperatures to take into account the cooling to which they will be subjected during the transport or in any case before their consumption.

In these cases, the quality of the froth in terms of texture is a less important parameter than the amount of froth present.

An apparatus 1 such as the one exemplified in figure 3b allows to combine the advantages resulting from the provision of a steam ejector device 9 arranged upstream of the pump 11 and as described above with the achievement of a higher final temperature of the froth produced, containing in each case the expansion of the air due to heating and the formation of undesired bubbles which instead occur in the apparatuses according to the prior art.

In fact, in the latter, as known, all the steam necessary to increase the temperature of the milk froth is injected into the froth downstream of the pump; the milk froth therefore undergoes a temperature difference of over 65°C.

With an apparatus 1 as the one shown in figure 3b, the temperature difference that the milk froth undergoes downstream of the pump 11 is instead smaller and, advantageously, between 10°C and 20°C.

In this way, while losing in texture quality, the quantity of froth will be preserved, the phenomenon of air expansion being limited.

The present invention also refers to a method for frothing milk.

With reference to the cited figures, the method for frothing milk comprises, according to the invention, the steps of:
- injecting steam into the milk to be frothed by means of a steam ejector device 9 as described above, to obtain a milk and steam mixture, where particularly milk comes from a container 3 through a first inlet line 93 of the steam ejector device 9, while steam comes from a steam source 5 through a second inlet line 95 of the steam ejector device 9;
- sucking the mixture of milk and steam and air by means of a pump 11 placed downstream of the steam ejector device 9 to form a froth of said milk and steam mixture, where the mixture of milk and steam and air comes from an outlet line 97 of the steam ejector device 9;
- delivering the froth thus formed along a delivery line 111, for example to a mug 113.

The step of injecting steam in the milk, by means of the steam ejector device 9 advantageously allows to also heat the milk to be frothed. Such injection is made before the pump 11 sucks air coming from the air intake 7 as air coming from the air intake 7 is supplied in the apparatus 1, by means of the three-way fitting 13, downstream of the steam ejector device 9, which is installed upstream of the pump 11; in this way, the problems of low quality of the froth affecting the solutions of the state of the art, as described above, are avoided.

The step of sucking the mixture of milk and steam and air due to the pump 11 allows to form a froth of the milk and steam mixture by means of such pump 11 which, as mentioned above, is preferably of the gear-type.

In a possible embodiment, the method for frothing milk comprises, according to the invention, the further step of:
- Injecting a further quantity of steam in the froth of the milk and steam mixture outgoing from the pump 11.

This further step of injecting a further quantity of steam in the froth of the milk and steam mixture outgoing from the pump 11 raises the temperature of the froth no more than 20°C, preferably 10°C÷20°C.

This further step precedes the step of delivering the froth along the delivery line 111.

This further step is made by means of an auxiliary steam ejector device 9' as described above.

The operation of the apparatus for frothing milk is clear and apparent by the above-described.

In particular, the apparatus 1 can provide different typologies of milk whipping for preparing various typologies of beverages.

By way of example, two operation sequences in extreme cases are reported. Whipped hot milk for preparing an Italian cappuccino and whipped cold milk to be garnished with syrups or liquors.

Upon commanding for delivering whipped hot milk, the apparatus 1 can operate as follows.

The three-way bypass valve 31 is positioned with the way towards the steam ejector device 9 being open and the way towards the bypass line 30 being closed. Thereby, milk coming from the container 3 has no possibility to be conveyed on the bypass line 30. Furthermore, the first proportional valve 50 opens at a percentage value based on the recipe for preparing the froth of the whipped hot milk to be delivered. In this way, the steam ejector device 9 is supplied with the steam starting to flow therein, generating a depression upstream of such device 9 and a pressure downstream. This difference in pressure helps to suck milk coming from the container 3, through the first inlet line 93, so as to convey it inside the steam ejector device 9 by means of the suction mouth 92. At this point, the steam is injected in the milk contained in the suction chamber 90 of the steam ejector device 9 through the steam injection nozzle 94.

This phenomenon is consequent of the specific configuration of the steam ejector device 9. Indeed, the steam, before passing through the steam injection nozzle 94, is provided with high pressure and low speed. Downstream of the nozzle an adiabatic expansion occurs, and the steam flow will have low pressure and high speed. Suitably sizing the nozzle 94 and the sections of the suction chamber 90 will allow to generate a sufficient depression to start sucking milk. Downstream of the nozzle 94, the steam ejector device 9 has a sequence of chambers 90, 96 and 98 defining, as explained above, a configuration of a diffuser designed on the basis of the Venturi principle. In this way, the pre-mixture of milk and steam is forced to a second expansion, in the diffusion chamber 98, which promotes the mixing and homogenizing thereof.

Steam and milk thus form an already partially whipped mixture of milk and steam.

After a settable time t₁ according to the recipe for preparing the beverage, which also depends on the length of the first inlet line 93, i.e., on the distance between the container 3 and the remaining part of the apparatus 1, the pump 11 is activated and the second proportional valve 70 opens at a percentage value based on the recipe for preparing the froth of the whipped hot milk to be delivered. The operation speed for operating the pump 11 can be also set based on the above-mentioned recipe. At this point, the pump 11 sucks the pre-mixture of milk and steam coming from the outlet line 97 of the steam ejector device 9 with air to form the froth of the milk and steam mixture to be delivered. In other words, the partially whipped pre-mixture of milk-steam and air passes inside the pump 11 where it will be further whipped and homogenized and pushed along the delivery line 111 through the delivery nozzle 114, to the cup 113, without further processes which can affect the whipping thereof.

Activating the pump 11 with a delay equal to the above-mentioned time t₁ allows the same to always be in triggering conditions. In this way, the desired quality of the first millilitres of delivered froth can be ensured. On the other hand, often, precisely for promoting the pump triggering, there is a tendency to make the pump suck only milk for the first one or two seconds at the expense of the overall quality of the froth. The pump 11, according to the invention, sucks already whipped milk from the steam ejector device 9, and in pressure, and thus can immediately provide high-quality whipped milk.

Furthermore, installing the steam ejector device 9 upstream of the pump 11 allows the same to break the air bubbles formed by injecting steam and to re-homogenize air in the milk and steam mixture. Moving the meeting between air and steam upstream of the pump, it is totally eliminated the problem of the air expansion and the generation of bubbles being the same eliminated.

Such advantages cannot be replied by installing a three-way valve in place of the steam ejector device 9, as part of the steam could flow in the milk container 3 along the first inlet line 93 during the transitions of the operation of the apparatus 1, since a three-way valve cannot create the local depression and pressure conditions helping the mixture flow to flow in the desired direction. Due to the installation of the steam ejector device 9 upstream of the pump 11, thus, the provided froth is always high-quality and triggering the pump 11 is always ensured and immediate.

If it is necessary to increase the temperature of the froth delivered, for production requirements, an auxiliary steam ejector device 9' can be inserted downstream of the pump 11 to inject an auxiliary quantity of steam in the froth outgoing from the pump 11 as intended in the case of figure 3b.

Instead, in the case of delivery of whipped cold milk the apparatus 1 can operate as follows.

The three-way bypass valve 31 is positioned with the way towards the steam ejector device 9 being closed and the way towards the bypass line 30 being open.

The pump 11 sucks milk coming from the container 3 at a settable speed depending on the recipe for preparing the froth of the whipped cold milk to be delivered.

At this point, the second proportional valve 70 opens at a settable percentage value after a time t₂ being recipe-settable to allow the pump 11 to be in ideal triggering conditions. Indeed, as already mentioned, if the container 3 is placed in a disadvantageous position, the immediate opening of the second proportional valve 70 could inhibit the triggering of the pump 11 itself.

Thereby, the pump 11 whips and homogenizes milk and air to form the froth of the whipped cold milk to be delivered.

Finally, the formed froth and thus the whipped cold milk thus prepared is delivered along the delivery line 111, for example to a mug 113.

In the case depicted in figure 3b, in order to produce whipped cold milk, the first proportional valve 50 is closed.

It was practically found that the apparatus for frothing milk, according to the present invention, achieves the purposes as well as the prefixed objects, as it allows to suck milk even in disadvantageous conditions.

Another advantage of the apparatus, according to the invention, consists in allowing the sucking and frothing pump to always work in ideal triggering conditions.

A further advantage of the apparatus, according to the invention, consists in avoiding the formation of air bubbles inside the froth with consequent deterioration of the quality thereof.

The apparatus for frothing milk thus conceived is susceptible to a number of modifications and variations, all falling within the scope of the invention as defined by the claims.

In practice, the used materials, as long as compatible with the specific use, as well as the contingent size and shapes, can be any, depending on the requirements.

## Claims

1. Apparatus (1) for frothing milk, particularly for a coffee machine, comprising:
- a container (3) adapted to contain milk to be frothed;
- a steam source (5);
- a steam ejector device (9) comprising a first inlet line (93) in fluid communication with said container (3) and a second inlet line (95) in fluid communication with said steam source (5), said steam ejector device (9) being configured to inject steam into said milk to be frothed to obtain a milk and steam mixture, said steam ejector device (9) comprising an outlet line (97) of said milk and steam mixture;
**characterized in that** the apparatus (1) further comprises:
- an air intake (7) in fluid communication with said outlet line (97) of said steam ejector device (9);
- a pump (11), placed downstream of said steam ejector device (9), configured to suck said mixture of milk and steam and air coming from said outlet line (97) of said steam ejector device (9), said pump (11) being adapted to form a froth of said mixture of milk and steam and to deliver said froth along a delivery line (111).

2. Apparatus (1), according to claim 1, wherein along said delivery line (111) downstream of said pump (11) only a discharge valve (112) is placed, preferably a three-way valve.

3. Apparatus (1), according to claim 1 or 2, comprising a first proportional valve (50) placed on said second inlet line (95) between said steam source (5) and said steam ejector device (9).

4. Apparatus (1), according to one or more of the preceding claims, wherein said air intake (7) is in fluid communication with said outlet line (97) of said steam ejector device (9) by means of a second proportional valve (70) .

5. Apparatus (1), according to one or more of the preceding claims, comprising a bypass line (30) in fluid communication respectively with said container (3) and with said outlet line (97) of said steam ejector device (9) by means of a three-way fitting (32), said apparatus (1) comprising a three-way bypass valve (31), said first inlet line (93) of said steam ejector device (9) and said bypass line (30) being in fluid communication with said outlet line (97) of said steam ejector device (9) through said bypass valve (31).

6. Apparatus (1), according to one or more of the preceding claims, wherein said steam ejector device (9) comprises a suction chamber (90) on which respectively a suction mouth (92) connected to said first inlet line (93) and a steam injection nozzle (94) connected to said second inlet line (95), said steam ejector device (9) further comprising a mixing chamber (96) communicating with said suction chamber (90), and a diffusion chamber (98) communicating with said mixing chamber (96).

7. Apparatus (1), according to claim 6, wherein said suction chamber (90) presenting a volume whose cross section narrows as it approaches said mixing chamber (96), said diffusion chamber (98) presenting a volume whose cross section widens away from said mixing chamber (96), said mixing chamber (96) presenting a volume having a substantially constant cross section along the longitudinal development direction.

8. Apparatus (1), according to one or more of the preceding claims, comprising a three-way fitting (13) adapted to put said air intake (7) in fluid communication with said outlet line (97) of said steam ejector device (9).

9. Apparatus (1), according to one or more of claims 1 to 7, wherein said air intake (7) is in fluid communication with said steam ejector device (9) in proximity to said outlet line (97).

10. Apparatus (1), according to one or more of claims 1 and 3 to 9, when claims 3 to 9 are not dependent on claim 2, comprising an auxiliary steam ejector device (9') arranged downstream of said pump (11) and comprising:
- a first inlet line (93') in fluid communication with the outflow of said pump (11);
- a second inlet line (95') in fluid communication with a steam source (5);
- an outlet line (97') in fluid communication with said delivery line (111),
said auxiliary steam ejector device (9') being configured to inject a quantity of auxiliary steam in said froth of said mixture of milk and steam outgoing from said pump (11).

11. Apparatus (1), according to claim 10, wherein along said delivery line (111) downstream of said auxiliary steam ejector device (9') there is a discharge valve (112), preferably a three-way valve.

12. Method for frothing milk applied by means of an apparatus (1) according to one or more of claims 1 to 11, wherein said method comprises the steps of:
- injecting steam into the milk to be frothed, by means of a steam ejector device (9), to obtain a mixture of milk and steam, said milk coming from a container (3) through a first inlet line (93) of said steam ejector device (9), said steam coming from a steam source (5) through a second inlet line (95) of said steam ejector device (9);
- sucking said mixture of milk and steam and air by means of a pump (11) placed downstream of said steam ejector device (9) to form a froth of said mixture of milk and steam, said mixture of milk and steam and air coming from an outlet line (97) of said steam ejector device (9);
- delivering said froth along a delivery line (111).

13. Method according to claim 12, further comprising before said step of delivering, the step of:
- Injecting a further quantity of steam into the froth of the mixture of milk and steam outgoing from said pump (11), said froth undergoing a temperature increase of less than or equal to 20°C, preferably between 10°C and 20°C.

## Patentansprüche

1. Vorrichtung (1) zum Aufschäumen von Milch, insbesondere für eine Kaffeemaschine, umfassend:
- einen Behälter (3), der die aufzuschäumende Milch aufnehmen kann;
- eine Dampfquelle (5);
- eine Dampfausstoßeinrichtung (9), die eine erste Einlassleitung (93) in Fluidkommunikation mit dem Behälter (3) und eine zweite Einlassleitung (95) in Fluidkommunikation mit der Dampfquelle (5) umfasst, wobei die Dampfausstoßeinrichtung (9) so konfiguriert ist, dass sie Dampf in die aufzuschäumende Milch einspritzt, um ein Gemisch aus Milch und Dampf zu erhalten, wobei die Dampfausstoßeinrichtung (9) eine Auslassleitung (97) für das Gemisch aus Milch und Dampf umfasst;
**dadurch gekennzeichnet, dass** die Vorrichtung (1) ferner Folgendes umfasst:
- einen Lufteinlass (7) in Fluidkommunikation mit der Auslassleitung (97) der Dampfausstoßeinrichtung (9);
- eine Pumpe (11), die stromabwärts der Dampfausstoßeinrichtung (9) angeordnet ist und so konfiguriert ist, dass sie das Gemisch aus Milch und Dampf und Luft, das aus der Auslassleitung (97) der Dampfausstoßeinrichtung (9) kommt, ansaugt, wobei die Pumpe (11) so angepasst ist, dass sie einen Schaum aus dem Gemisch aus Milch und Dampf bildet und den Schaum entlang einer Förderleitung (111) fördert.

2. Vorrichtung (1) nach Anspruch 1, wobei entlang der Förderleitung (111) stromabwärts der Pumpe (11) nur ein Ablassventil (112), vorzugsweise ein Dreiwegeventil, angeordnet ist.

3. Vorrichtung (1) nach Anspruch 1 oder 2, umfassend ein erstes Proportionalventil (50), das auf der zweiten Einlassleitung (95) zwischen der Dampfquelle (5) und der Dampfausstoßeinrichtung (9) angeordnet ist.

4. Vorrichtung (1) nach einem oder mehreren der vorhergehenden Ansprüche, wobei der Lufteinlass (7) über ein zweites Proportionalventil (70) in Fluidkommunikation mit der Auslassleitung (97) der Dampfausstoßeinrichtung (9) steht.

5. Vorrichtung (1) nach einem oder mehreren der vorhergehenden Ansprüche, umfassend eine Bypass-Leitung (30), die über ein Dreiwege-Anschlussstück (32) in Fluidkommunikation jeweils mit dem Behälter (3) und mit der Auslassleitung (97) der Dampfausstoßeinrichtung (9) steht, wobei die Vorrichtung (1) ein Dreiwege-Bypass-Ventil (31) umfasst, wobei die erste Einlassleitung (93) der Dampfausstoßeinrichtung (9) und die Bypass-Leitung (30) über das Bypass-Ventil (31) mit der Auslassleitung (97) der Dampfausstoßeinrichtung (9) in Fluidkommunikation stehen.

6. Vorrichtung (1) nach einem oder mehreren der vorhergehenden Ansprüche, wobei die Dampfausstoßeinrichtung (9) eine Saugkammer (90) umfasst, an der jeweils eine Saugmündung (92), die mit der ersten Einlassleitung (93) verbunden ist, und eine Dampfeinspritzdüse (94), die mit der zweiten Einlassleitung (95) verbunden ist, angeordnet sind, wobei die Dampfausstoßeinrichtung (9) ferner eine Mischkammer (96), die mit der Saugkammer (90) kommuniziert, und eine Diffusionskammer (98) umfasst, die mit der Mischkammer (96) kommuniziert.

7. Vorrichtung (1) nach Anspruch 6, wobei die Saugkammer (90) ein Volumen aufweist, dessen Querschnitt sich verengt, wenn sie sich der Mischkammer (96) nähert, wobei die Diffusionskammer (98) ein Volumen aufweist, dessen Querschnitt sich von der Mischkammer (96) weg erweitert, wobei die Mischkammer (96) ein Volumen mit einem im Wesentlichen konstanten Querschnitt entlang der Längsentwicklungsrichtung aufweist.

8. Vorrichtung (1) nach einem oder mehreren der vorangehenden Ansprüche, umfassend ein Dreiwege-Anschlussstück (13), das so angepasst ist, dass es den Lufteinlass (7) in Fluidkommunikation mit der Auslassleitung (97) der Dampfausstoßeinrichtung (9) bringt.

9. Vorrichtung (1) nach einem oder mehreren der Ansprüche 1 bis 7, wobei der Lufteinlass (7) in Fluidkommunikation mit der Dampfausstoßeinrichtung (9) in der Nähe der Auslassleitung (97) steht.

10. Vorrichtung (1) nach einem oder mehreren der Ansprüche 1 und 3 bis 9, wobei die Ansprüche 3 bis 9 nicht von Anspruch 2 abhängig sind,
umfassend eine Hilfsdampfausstoßeinrichtung (9'), die stromabwärts der Pumpe (11) angeordnet ist und Folgendes umfasst:
- eine erste Einlassleitung (93') in Fluidkommunikation mit dem Ausfluss der Pumpe (11);
- eine zweite Einlassleitung (95') in Fluidkommunikation mit einer Dampfquelle (5);
- eine Auslassleitung (97') in Fluidkommunikation mit der Förderleitung (111),
wobei die Hilfsdampfausstoßeinrichtung (9') so konfiguriert ist, dass sie eine Menge Hilfsdampf in den Schaum des aus der Pumpe (11) austretenden Gemisch aus Milch und Dampfes einspritzt.

11. Vorrichtung (1) nach Anspruch 10, wobei sich entlang der Förderleitung (111) stromabwärts der Hilfsdampfausstoßeinrichtung (9') ein Ablassventil (112), vorzugsweise ein Dreiwegeventil, befindet.

12. Verfahren zum Aufschäumen von Milch, das mittels einer Vorrichtung (1) nach einem oder mehreren der Ansprüche 1 bis 11 angewandt wird, wobei das Verfahren die folgenden Schritte umfasst:
- Einspritzen von Dampf in die aufzuschäumende Milch mittels einer Dampfausstoßeinrichtung (9), um ein Gemisch aus Milch und Dampf zu erhalten, wobei die Milch aus einem Behälter (3) durch eine erste Einlassleitung (93) der Dampfausstoßeinrichtung (9) kommt und der Dampf aus einer Dampfquelle (5) durch eine zweite Einlassleitung (95) der Dampfausstoßeinrichtung (9) kommt;
- Ansaugen des Gemischs aus Milch und Dampf und Luft mittels einer Pumpe (11), die stromabwärts der Dampfausstoßeinrichtung (9) angeordnet ist, um einen Schaum aus dem Gemisch aus Milch und Dampf zu bilden, wobei das Gemisch aus Milch und Dampf und Luft aus einer Auslassleitung (97) der Dampfausstoßeinrichtung (9) kommt;
- Fördern des Schaums entlang einer Förderleitung (111).

13. Verfahren nach Anspruch 12, umfassend ferner vor dem Schritt des Förderns den Schritt von:
- Einspritzen einer weiteren Menge Dampf in den Schaum des aus der Pumpe (11) austretenden Gemisch aus Milch und Dampf, wobei der Schaum einen Temperaturanstieg von weniger als oder gleich 20°C, vorzugsweise zwischen 10°C und 20°C erfährt.

## Revendications

1. Appareil (1) pour faire mousser le lait, en particulier pour une machine à café, comprenant:
- un récipient (3) destiné à contenir du lait à faire mousser;
- une source de vapeur (5);
- un dispositif éjecteur de vapeur (9) comprenant une première conduite d'entrée (93) en communication fluidique avec ledit récipient (3) et une seconde conduite d'entrée (95) en communication fluidique avec ladite source de vapeur (5), ledit dispositif éjecteur de vapeur (9) étant configuré pour injecter de la vapeur dans ledit lait à faire mousser afin d'obtenir un mélange de lait et de vapeur, ledit dispositif éjecteur de vapeur (9) comprenant une conduite de sortie (97) dudit mélange de lait et de vapeur;
**caractérisé en ce que** l'appareil (1) comprend en outre:
- une admission d'air (7) en communication fluidique avec ladite conduite de sortie (97) dudit dispositif éjecteur de vapeur (9);
- une pompe (11), placée en aval dudit dispositif éjecteur de vapeur (9), configurée pour aspirer ledit mélange de lait et de vapeur et l'air provenant de ladite conduite de sortie (97) dudit dispositif éjecteur de vapeur (9), ladite pompe (11) étant adaptée pour former une mousse dudit mélange de lait et de vapeur et pour délivrer ladite mousse le long d'une conduite d'alimentation (111).

2. Appareil (1), selon la revendication 1, dans lequel, le long de ladite conduite d'alimentation (111) en aval de ladite pompe (11), seule une soupape de décharge (112) est placée, de préférence une soupape à trois voies.

3. Appareil (1), selon la revendication 1 ou 2, comprenant une première soupape proportionnelle (50) placée sur ladite seconde conduite d'entrée (95) entre ladite source de vapeur (5) et ledit dispositif éjecteur de vapeur (9).

4. Appareil (1), selon l'une ou plusieurs des revendications précédentes, dans lequel ladite admission d'air (7) est en communication fluidique avec ladite conduite de sortie (97) dudit dispositif éjecteur de vapeur (9) au moyen d'une seconde soupape proportionnelle (70).

5. Appareil (1), selon l'une ou plusieurs des revendications précédentes, comprenant une conduite de dérivation (30) en communication fluidique respectivement avec ledit récipient (3) et avec ladite conduite de sortie (97) dudit dispositif éjecteur de vapeur (9) au moyen d'un raccord à trois voies (32), ledit appareil (1) comprenant une soupape de dérivation à trois voies (31), ladite première conduite d'entrée (93) dudit dispositif éjecteur de vapeur (9) et ladite conduite de dérivation (30) étant en communication fluidique avec ladite conduite de sortie (97) dudit dispositif éjecteur de vapeur (9) par l'intermédiaire de ladite soupape de dérivation (31).

6. Appareil (1), selon l'une ou plusieurs des revendications précédentes, dans lequel ledit dispositif éjecteur de vapeur (9) comprend une chambre d'aspiration (90) sur laquelle se trouvent respectivement une bouche d'aspiration (92) reliée à ladite première conduite d'entrée (93) et une buse d'injection de vapeur (94) reliée à ladite seconde conduite d'entrée (95), ledit dispositif éjecteur de vapeur (9) comprenant en outre une chambre de mélange (96) communiquant avec ladite chambre d'aspiration (90), et une chambre de diffusion (98) communiquant avec ladite chambre de mélange (96).

7. Appareil (1), selon la revendication 6, dans lequel ladite chambre d'aspiration (90) présente un volume dont la section transversale se rétrécit à l'approche de ladite chambre de mélange (96), ladite chambre de diffusion (98) présentant un volume dont la section transversale s'élargit à l'écart de ladite chambre de mélange (96), ladite chambre de mélange (96) présentant un volume dont la section transversale est sensiblement constante le long de la direction de développement longitudinale.

8. Appareil (1), selon l'une ou plusieurs des revendications précédentes, comprenant un raccord à trois voies (13) adapté pour mettre ladite admission d'air (7) en communication fluidique avec ladite conduite de sortie (97) dudit dispositif éjecteur de vapeur (9).

9. Appareil (1), selon l'une ou plusieurs des revendications 1 à 7, dans lequel ladite admission d'air (7) est en communication fluidique avec ledit dispositif éjecteur de vapeur (9) à proximité de ladite conduite de sortie (97).

10. Appareil (1), selon l'une ou plusieurs des revendications 1 et 3 à 9, les revendications 3 à 9 ne dépendant pas de la revendication 2,
comprenant un dispositif auxiliaire éjecteur de vapeur (9') disposé en aval de ladite pompe (11) et comprenant:
- une première conduite d'entrée (93') en communication fluidique avec le débit de sortie de ladite pompe (11);
- une seconde conduite d'entrée (95') en communication fluidique avec une source de vapeur (5);
- une conduite de sortie (97') en communication fluidique avec ladite conduite d'alimentation (111),
ledit dispositif auxiliaire éjecteur de vapeur (9') est configuré pour injecter une quantité de vapeur auxiliaire dans ladite mousse dudit mélange de lait et de vapeur sortant de ladite pompe (11).

11. Appareil (1), selon la revendication 10, dans lequel, le long de ladite conduite d'alimentation (111) en aval dudit dispositif auxiliaire éjecteur de vapeur (9'), se trouve une soupape de décharge (112), de préférence une soupape à trois voies.

12. Procédé pour faire mousser du lait appliqué au moyen d'un appareil (1) selon l'une ou plusieurs des revendications 1 à 11, dans lequel ledit procédé comprend les étapes suivantes:
- injecter de la vapeur dans le lait à faire mousser, au moyen d'un dispositif éjecteur de vapeur (9), pour obtenir un mélange de lait et de vapeur, ledit lait provenant d'un récipient (3) par une première conduite d'entrée (93) dudit dispositif éjecteur de vapeur (9), ladite vapeur provenant d'une source de vapeur (5) par une seconde conduite d'entrée (95) dudit dispositif éjecteur de vapeur (9);
- aspirer ledit mélange de lait et de vapeur et d'air au moyen d'une pompe (11) placée en aval dudit dispositif éjecteur de vapeur (9) pour former une mousse dudit mélange de lait et de vapeur, ledit mélange de lait et de vapeur et d'air provenant d'une conduite de sortie ( 97) dudit dispositif éjecteur de vapeur (9);
- distribuer ladite mousse le long d'une ligne d'alimentation (111).

13. Procédé selon la revendication 12, comprenant en outre, avant l'étape d'alimentation, l'étape suivante:
- injecter une quantité supplémentaire de vapeur dans la mousse du mélange de lait et de vapeur sortant de ladite pompe (11), ladite mousse subissant une augmentation de température inférieure ou égale à 20°C, de préférence entre 10°C et 20°C.
